(19) Europäisches Patentamt
European Patent Office
Office européen des brevets

(11) **EP 1 481 277 B1**

(12) **FASCICULE DE BREVET EUROPEEN**

(45) Date de publication et mention
de la délivrance du brevet:
**15.08.2007 Bulletin 2007/33**

(51) Int Cl.:
***G02B 21/00*** *(2006.01)*

(21) Numéro de dépôt: **03735767.0**

(86) Numéro de dépôt international:
**PCT/FR2003/000699**

(22) Date de dépôt: **04.03.2003**

(87) Numéro de publication internationale:
**WO 2003/075070 (12.09.2003 Gazette 2003/37)**

(54) **DISPOSITIF DE BALAYAGE OPTIQUE CONFOCAL**

CONFOKALE OPTISCHE SCANNING-EINRICHTUNG

CONFOCAL OPTICAL SCANNING DEVICE

(84) Etats contractants désignés:
**AT BE BG CH CY CZ DE DK EE ES FI FR GB GR
HU IE IT LI LU MC NL PT RO SE SI SK TR**

(30) Priorité: **04.03.2002 FR 0202740**

(43) Date de publication de la demande:
**01.12.2004 Bulletin 2004/49**

(73) Titulaire: **Lauer, Vincent
94130 Nogent sur Marne (FR)**

(72) Inventeur: **Lauer, Vincent
94130 Nogent sur Marne (FR)**

(56) Documents cités:
**WO-A-01/22146         WO-A-02/23247
WO-A-92/17806          US-A- 4 170 398**

• **BRAKENHOFF G J ET AL: "NOVEL CONFOCAL
IMAGING AND VISUALIZATION TECHNIQUES"
PROCEEDINGS OF THE ROYAL
MICROSCOPICAL SOCIETY CONFERENCE
(MICRO90) 2-6 JULY 1990, LONDON, BRISTOL,
GB, vol. 1, 1990, pages 247-250, XP000390782**

**Description**

**Domaine Technique**

L'invention concerne un dispositif de balayage optique destiné à balayer simultanément un plan observé et un plan image.

**Art antérieur**

Le brevet numéro PCT/FR01/02890 décrit un dispositif de balayage destiné à balayer simultanément un plan observé et un plan image.
Deux types de dispositifs de balayage sont décrits dans ce document :

- des dispositifs utilisant un réseau de micromiroirs pour filtrer le faisceau lumineux, et n'utilisant qu'une seule face d'un miroir mobile.
- des dispositifs utilisant un ou plusieurs trous microscopiques en tant que dispositif de filtrage spatial, pour filtrer le faisceau lumineux, et utilisant les deux faces opposées d'un miroir mobile.

Les dispositifs de balayage de la seconde catégorie utilisent un miroir mobile ayant :

- une face objet dirigée vers l'objet observé (et donc vers l'objectif de microscope), qui permet de déplacer, dans le plan du réseau de trous microscopiques, l'image géométrique d'un point fixe de l'objet observé,
- une face image dirigée vers le dispositif de détection (par exemple, la caméra), qui permet de ramener en un point fixe du dispositif de détection l'image géométrique d'un point fixe de l'objet observé,

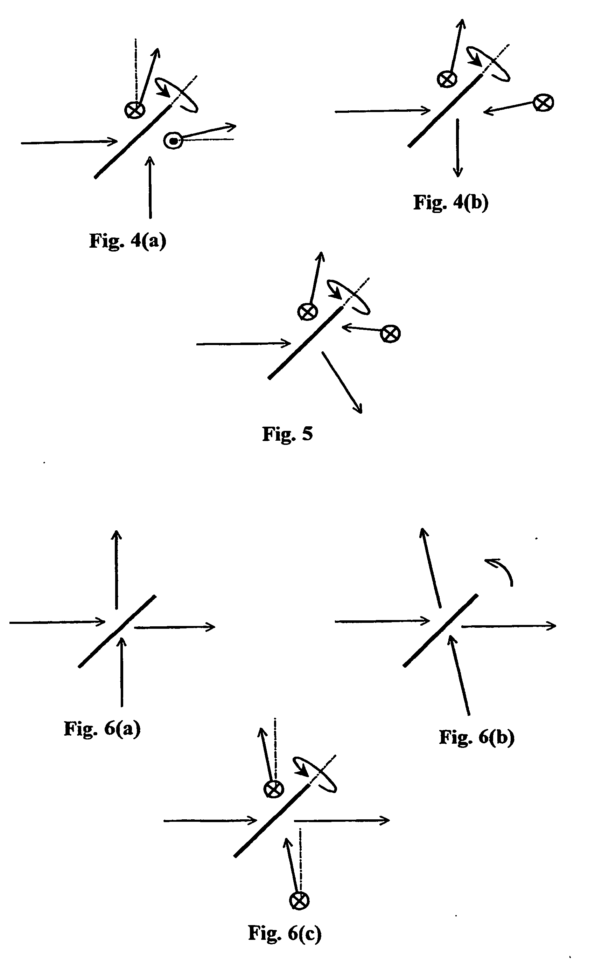

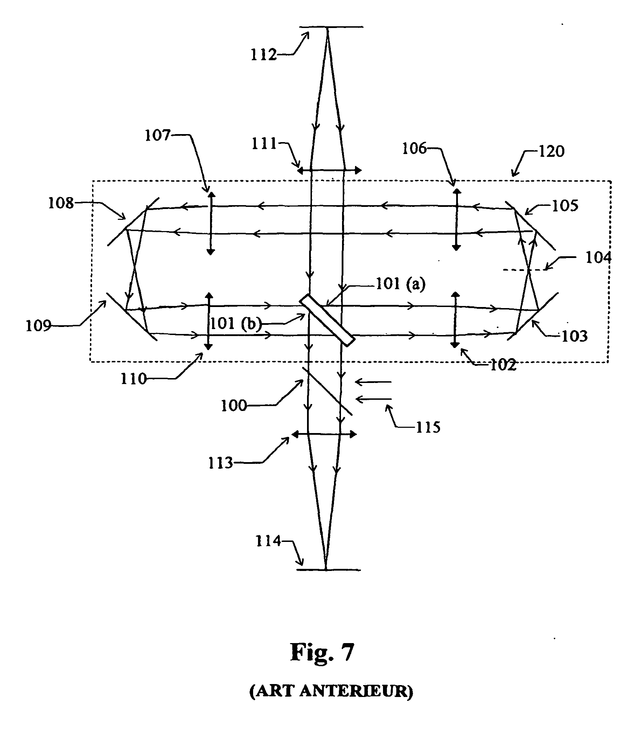

La face objet permet donc le balayage à proprement parler, et la face image permet une compensation de ce balayage.

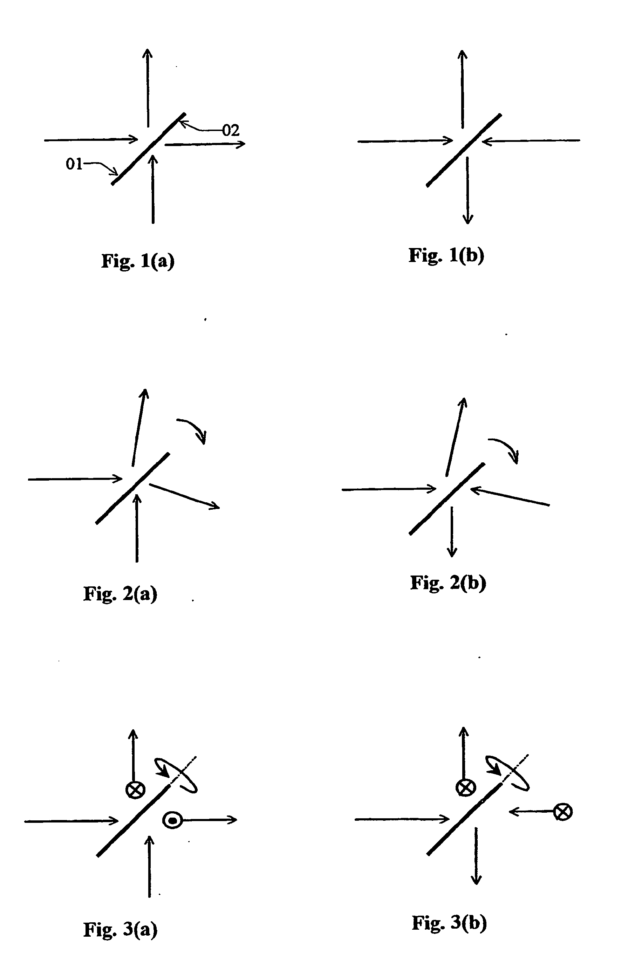

Les figures 1 à 5 permettent de mieux comprendre le mécanisme de compensation. La figure 1(a) montre une configuration fictive ayant des propriétés simples de symétrie. Le faisceau arrivant horizontalement sur la face objet 01 est réfléchi vers le haut. Le faisceau arrivant verticalement sur la face image 02 est réfléchi vers la droite. La figure 1 (b) montre le principe de balayage et de compensation utilisé dans l'état de l'art. Le faisceau arrive horizontalement sur la face objet et est réfléchi vers le haut Le faisceau arrive horizontalement sur la face image et est réfléchi vers le bas.
Si le miroir mobile subit une rotation autour d'un axe orthogonal au plan de la figure, comme indiqué sur la figure 2, les faisceaux réfléchis de la figure 1(a) subissent chacun une rotation dans le sens indiqué par la figure 2(a). Par inversion du sens des faisceaux, on en déduit la direction que doivent avoir les faisceaux incidents sur la face image du miroir mobile, dans le système de balayage et de compensation de la figure 1(b), pour que la direction du faisceau en sortie reste constante. Cette direction est représentée sur la figure 2(b). Le système de lentilles et de miroir ramenant le faisceau lumineux de la face objet à la face image du miroir mobile doit donc être prévu pour que le faisceau réfléchi par la face objet et dévié vers la droite de la figure, parvienne à la face image en étant dévié vers le haut
Si le miroir mobile subit une petite rotation autour d'un axe situé dans le plan de la figure, comme indiqué sur la figure 3, les directions des faisceaux des figures 2(a) et 2(b) sont modifiées comme indiqué respectivement sur les figures 3(a) et 3(b). Sur ces figures, une croix représente un faisceau s'éloignant de l'observateur, et un point dans un rond représente un faisceau se rapprochant de l'observateur.
Toutefois, la situation représentée sur la figure 3 n'est valable qu'au premier ordre. Lorsque les angles de rotation du miroir mobile deviennent suffisamment important, un phénomène du second ordre apparaît qui est une rotation vers la droite du faisceau réfléchi par la face objet. Les schémas de la figure 3 doivent alors être modifiés comme indiqué sur la figure 4.
Pour que la compensation se fasse correctement au premier ordre, le système de lentilles et de miroirs ramenant le faisceau de la face objet à la face image doit permettre de vérifier les situations des figures 2(b) et 3(b). Par conséquence, un faisceau réfléchi par la face objet comme indiqué sur la figure 4(a) revient à la face image comme indiqué sur la figure 5. Hors pour repartir dans une direction constante il devrait revenir comme indiqué sur la figure 4(b). Il y a incompatibilité entre la compensation au premier ordre de l'ensemble des mouvements du miroir et la compensation au second ordre des mouvements de rotation autour d'un axe situé dans le plan de la figure. Le système étant conçu pour que la compensation se fasse correctement au premier ordre, la déviation du second ordre n'est pas compensée mais amplifiée, comme indiqué sur la figure 5. Par conséquence, l'image obtenue sur le détecteur est affectée par une perturbation du second ordre par rapport à l'amplitude des mouvements rotatifs du miroir autour d'un axe situé dans le plan de la figure.
La demande de brevet numéro WO 0122146A montre sur sa figure 3 un dispositif réglant ce problème. Une version simplifiée de ce dispositif a également été représentée sur la figure 7 de la présente demande. Une représentation « dépliée » en a été faite sur la figure 8 et les miroirs de redirection seuls ont été représentés sur la figure 9.

Ce dispositif comprend :

un miroir mobile en rotation 101 comprenant une face objet 101(a) et une face image 101(b), la face image du miroir mobile en rotation étant opposée à la face objet du miroir monté mobile en rotation,
un chemin optique reliant la face objet du miroir mobile en rotation à la face image du miroir mobile en rotation,
au moins un trou microscopique 104 placé dans un plan image intermédiaire sur le chemin optique (ici il s'agit en fait d'une fente 5 sur la figure 3 de WO 0122146A),
un premier groupe 102 de lentilles de contrôle constitué des lentilles placées sur le chemin optique entre la face objet du miroir mobile et le trou microscopique (groupe 4 sur la figure 3 de WO 0122146A),
un second groupe de lentilles de contrôle constitué des lentilles 106, 107, 110 placées sur le chemin optique entre le trou microscopique et la face image du miroir mobile en rotation (réunion des lentilles des sous-groupes 61, 62, 63 sur la figure 3 de WO 0122146A).
exactement quatre miroirs de redirection 103, 105, 108, 109 repliant le chemin optique pour permettre au chemin optique de relier la face objet du miroir mobile en rotation à la face image du miroir mobile en rotation.

Dans ce dispositif :

- le trajet optique reste contenu dans un plan.
- Le second groupe de lentilles de contrôle 106, 107, 110 est adapté pour qu'un faisceau incident suivant une direction fixe sur la face objet quitte la face image avec la même direction, indépendamment de la position du miroir mobile, pour un ensemble d'angles de rotation utiles du miroir mobile. Cette adaptation résulte du fait que le second groupe de lentilles de contrôle est constitué :
- d'un sous-groupe 110 ayant une distance focale positive.
- de deux sous-groupes 106 et 107 réalisant une inversion de l'image du trou microscopique 104. L'ensemble constitué des sous-groupes 110, 106, 107 (resp. 61, 62, 63 de la figure 3 de WO 0122146A) se caractérise en particulier par une distance focale négative, opposée à la distance focale du sous-groupe 102 (resp. 4 de la figure 3 de WO 0122146A).

Le problème est donc résolu par le brevet WO 0122146A au moyen d'un système de balayage dans lequel le faisceau incident sur la face objet est ramené à la face image de la manière indiquée sur la figure 6(a), à savoir que le faisceau réfléchi par la face objet revient vers la face image en ayant la même direction et le même sens que juste après sa réflexion par la face objet, et le faisceau quittant le miroir mobile après réflexion sur la face image a même direction et même sens que le faisceau incident sur le miroir mobile avant réflexion sur la face objet. La compensation des mouvements du miroir mobile se fait alors comme indiqué sur les figures 6(b) et (c) et il n'y a pas incompatibilité entre la compensation du premier ordre et la compensation du second ordre. Le système de lentilles et de miroirs permettant de ramener le faisceau réfléchi par la face objet, en direction de la face image, de la manière indiquée par la figure 6 (c), ramène également le faisceau réfléchi par la face objet de la figure 6(b) vers la face image comme indiqué par la figure 6(b). D'une manière générale on peut montrer que la compensation est parfaite à tous les ordres.

Dans le cas ou le miroir mobile a deux axes de rotation distincts, cette configuration pemet d'utiliser des angles de rotation importants autour des deux axes. Dans le cas ou le miroir mobile n'a qu'un axe de rotation, cette configuration améliore la robustesse du système par rapport aux imprécisions de positionnement du miroir, et permet l'utilisation de l'axe de rotation le plus pratique compte tenu des conditions d'encombrement. D'une manière générale, cette configuration permet d'élargir l'ensemble des angles de rotation utiles du miroir mobile. Toutefois, ces angles de rotation restent limités par les aberrations des lentilles et par le fait que le faisceau ne doit pas sortir d'une trajectoire le faisant passer par les lentilles de contrôle, les miroirs de redirection, et le réseau de trous microscopiques.

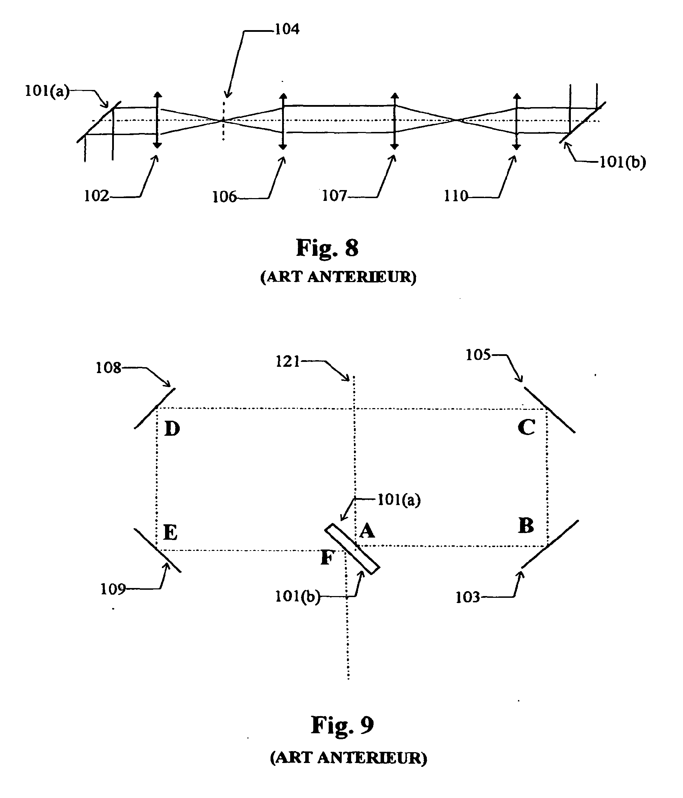

La figure 8 illustre le chemin optique de l'ensemble de balayage et de compensation de la figure 7, suivant une représentation « dépliée » ne prenant pas en compte les miroirs. Le faisceau issu de la face objet 101(a) du miroir galvanométrique traverse successivement la lentille 102, le réseau de trous microscopiques 104, la lentille 106, la lentille 107, la lentille 110, et revient à la face image 101 (b) du miroir galvanométrique. Le schéma de la figure 7 est obtenu en repliant ce trajet optique au moyen des miroirs de redirection 103,105,108,109. Les positions de ces miroirs et donc les caractéristiques du repliement du trajet optique peuvent être caractérisées par les coordonnées des points de ces miroirs qui se trouvent sur l'axe optique. On a représenté ces miroirs et ces points sur la figure 9. Le point A est le centre de la face objet 101(a) du miroir galvanométrique, situé sur l'axe optique 121. Le point B est le point du miroir 103 qui est sur l'axe optique 121. De même, les points C,D,E,F sont les points des miroirs successivement atteints par le faisceau et situés sur l'axe optique. Les points A,B,C,D,E,F sont ici coplanaires.

Toutefois, alors que le dispositif représenté par exemple sur la figure 28 de la demande de brevet PCT/FR01/02890 comporte uniquement une lentille relativement simple entre le trou microscopique et la face objet du miroir de balayage, et une lentille similaire entre le trou microscopique et la face image du miroir de balayage, le dispositif représenté sur la figure 3 de la demande de brevet WO 0122146A comprend d'un coté du trou microscopique un groupe de lentilles de contrôle composé au minimum de trois sous-groupes 61, 62, 63 (106, 107, 110 sur la figure 7 de la présente demande). Ceci rend le système nettement plus complexe sur le plan optique, en augmente l'encombrement et en diminue la transmissivité.

Description de l'invention

Le but de l'invention est de réaliser un dispositif ayant des propriétés optiques similaires à celles du dispositif décrit par la demande de brevet WO 0122146A et dont l'intérêt est détaillé ci-dessus, mais en minimisant l'encombrement du dispositif et en maximisant sa transmissivité.

Le but de l'invention est atteint au moyen d'un Dispositif de balayage optique confocal comprenant :

- un miroir mobile en rotation comprenant une face objet et une face image, la face image du miroir mobile en rotation étant opposée à la face objet du miroir mobile en rotation,
- un chemin optique reliant la face objet du miroir mobile en rotation à la face image du miroir mobile en rotation,
- au moins un trou microscopique placé dans un plan image intermédiaire sur le chemin optique,
- un premier groupe de lentilles de contrôle constitué des lentilles placées sur le chemin optique entre la face objet du miroir mobile et le trou microscopique,
- un second groupe de lentilles de contrôle constitué des lentilles placées sur le chemin optique entre le trou microscopique et la face image du miroir mobile en rotation,
- exactement quatre miroirs de redirection repliant le chemin optique pour permettre au chemin optique de relier la face objet du miroir mobile en rotation à la face image du miroir mobile en rotation,

caractérisé par les faits suivants :

- lesdits premier et second groupes de lentilles de contrôle ont des distances focales positives,
- l'orientation des miroirs de redirection est adaptée pour replier le trajet optique de manière à ce qu'un faisceau incident suivant une direction fixe sur la face objet quitte la face image avec une direction fixe, indépendante de la position du miroir mobile pour un ensemble d'angles de rotation utiles du miroir mobile, et de manière à ce qu'un faisceau incident sur la face image en provenance de la face objet ait même direction et même sens que le même faisceau lorsqu'il quitte la face objet en direction de la face image.

En utilisant deux groupes de lentilles de contrôle à distances focales positives, qui peuvent ne comprendre qu'une lentille chacun, on simplifie notablement le système par rapport au brevet WO 0122146A dans lequel un des groupes de lentilles de contrôle (formé des sous-groupes 61, 62, 63 sur la figure 3 de WO 0122146A) a une distance focale négative. L'adaptation du dispositif pour une compensation correcte du balayage doit alors être réalisée par une orientation adaptée des miroirs de redirection contrairement au brevet WO 0122146A dans lequel l'adaptation est réalisée par un groupe de lentilles de contrôle complexe à distance focale négative (formé des sous-groupes 61, 62, 63 sur la figure 3 de WO 0122146A). Le repliement du trajet optique par les miroirs de redirection « de manière à ce qu'un faisceau incident suivant une direction fixe sur la face objet quitte la face image avec une direction fixe, indépendante de la position du miroir mobile pour un ensemble d'angles de rotation utiles du miroir mobile, et de manière à ce qu'un faisceau incident sur la face image en provenance de la face objet ait même direction et même sens que le même faisceau lorsqu'il quitte la face objet en direction de la face image » permet cette compensation correcte du balayage en évitant les imperfections du système décrit dans la demande de brevet PCT/FR01/02890 et détaillées plus haut.

Plus précisément, l'orientation des miroirs de redirection est telle que les points *A, B, C, D, E, F* soient non coplanaires, ou :

*A* est le point de la face objet du miroir mobile qui se trouve sur l'axe optique,
*B* est le point du premier miroir de redirection atteint par un faisceau dirigé de la face objet vers la face image du miroir mobile, qui se trouve sur l'axe optique,
*C* est le point du deuxième miroir de redirection atteint par un faisceau dirigé de la face objet vers la face image du miroir mobile, qui se trouve sur l'axe optique,
*D* est le point du troisième miroir de redirection atteint par un faisceau dirigé de la face objet vers la face image du miroir mobile, qui se trouve sur l'axe optique,
*E* est le point du quatrième miroir de redirection atteint par un faisceau dirigé de la face objet vers la face image du miroir mobile, qui se trouve sur l'axe optique, et

*F* est le point de la face image du miroir mobile qui se trouve sur l'axe optique.

En effet une compensation correcte ne peut pas être obtenue que pour un chemin optique qui, contrairement aux chemins optiques décrits dans la demande de brevet PCT/FR01/02898 et dans WO 0122146A, n'est pas compris dans un plan.

Suivant l'invention, une compensation correcte est obtenue lorsque l'orientation des miroirs de redirection est adaptée pour que les points *A,B,C,D,E,F* vérifient la relation :

$$\left(AB \times BC, BC \times CD\right)_{BC} + \left(BC \times CD, CD \times DE\right)_{DC} + \left(CD \times DE, DE \times EF\right)_{DE}$$
$$+ \left(DE \times EF, EF \times BC\right)_{FE} = \pi$$

ou *(UV×VX, VX×XY)*$_{VX}$, représente l'angle entre le produit vectoriel *(UV×VX)* des vecteurs *UV* et *VX,* et le produit vectoriel *(VX×XY)* des vecteurs *VX* et *XY*, orienté par le vecteur *VX.*

Suivant une configuration préférée de l'invention chacun desdits groupes de lentilles a un plan focal situé sur une face du miroir mobile et un plan focal situé sur ledit au moins un trou microscopique. Suivant une configuration préférée de l'invention les deux groupes de lentilles sont identiques l'un à l'autre. Ces choix permettent de simplifier la conception optique du système.

## Description rapide des figures.

Les figures 1 à 5 servent de support à l'explication d'un défaut de certains microscopes selon l'art antérieur. Les figures 1(a), 2(a), 3(a), 4(a) représentent une configuration symmétrique permettant par inversion de la direction du faisceau d'obtenir les figures 1(b), 2(b), 3(b), 4(b) qui illustrent le principe de compensation utilisé dans l'état de la technique. La figure 1 représente la position centrale du miroir mobile. La figure 2 représente l'effet d'un mouvement de rotation autour d'un axe orthogonal au plan de la figure. La figure 3 représente l'effet au premier ordre d'un mouvement de rotation autour d'un axe situé dans le plan de la figure. La figure 4 représente l'effet au second ordre de ce mouvement. La figure 5 représente l'effet au second ordre de ce mouvement lorsque le système est configuré pour compenser au premier ordre les rotations du miroir mobile.

La figure 6 représente le principe utilisé dans l'art antérieur pour effectuer la compensation du mouvement de balayage. La figure 6(a) représente une position centrale du miroir mobile. La figure 6(b) représente l'effet d'une rotation autour d'un axe orthogonal au plan de la figure. La figure 6(c) représente l'effet d'une rotation autour d'un axe situé dans le plan de la figure.

La figure 7 représente une version simplifiée d'un système de balayage suivant l'art antérieur. La figure 8 représente le chemin optique utilisé sur la figure 7, mais sans le repliement dû aux miroirs de redirection. La figure 9 représente le principe de redirection par les miroirs et définit les points A,B,C.D.E.F caractérisant cette redirection.

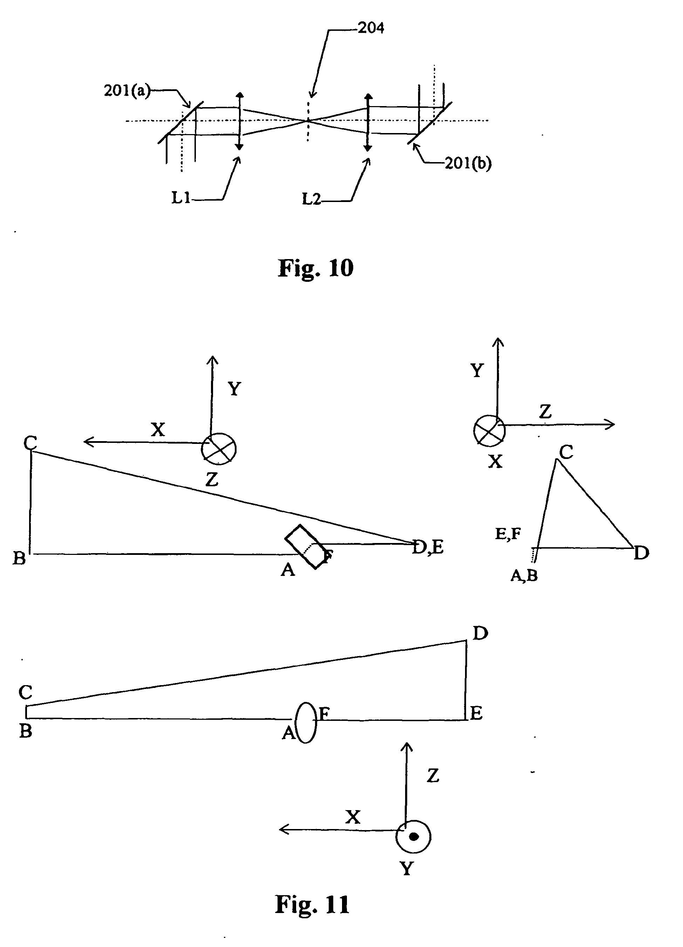

Les figures 10 à 15 se rapportent à un mode de réalisation de l'invention. La figure 10 représente le chemin optique « déplié », sans les miroirs de redirection. La figure 11 représente un exemple de position dans un espace 3D des points A,B,C,D,E.F qui définissent le repliement.

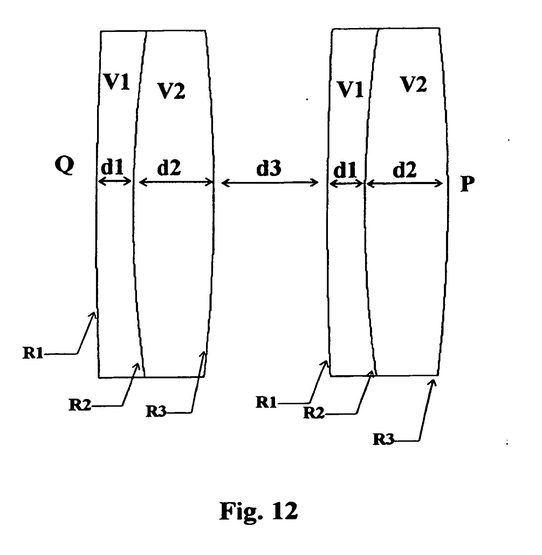

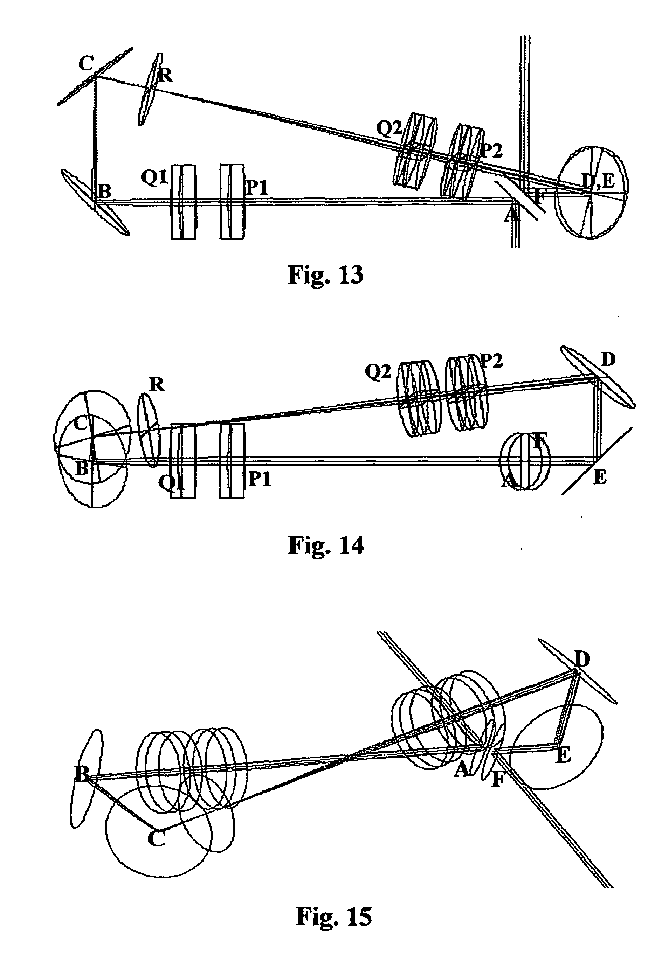

Les figures 12 à 15 se rapportent à un exemple particulier de ce mode de réalisation, complètement dimensionné. La figure 12 représente une lentille utilisée, composée de deux achromats identiques. Les figures 13 à 15 représentent plusieurs vues du dispositif, la figure 15 étant une vue en perspective.

## Exemple de réalisation

La figure 10 montre la représentation « dépliée » d'un mode de réalisation de l'invention, suivant le même principe que la figure 8. Le faisceau réfléchi par la face objet 201(a) du miroir galvanométrique traverse la lentille L1, le réseau de trous microscopique 204, la lentille L2, et arrive à la face image 201(b) du miroir galvanométrique. Les lentilles L1 et L2 sont identiques et ont chacune un plan focal sur le réseau 204 et un plan focal sur une des faces du miroir galvanométrique. Le trajet optique est replié au moyen de 4 miroirs comme dans le cas précédent. Toutefois une configuration de repliement simple comme celle illustrée sur la figure 9 ne convient pas, car elle ne permet pas le retour du faisceau au miroir galvanométrique suivant l'orientation illustrée par les figures 6(b) et 6(c), qui est indispensable à une compensation correcte.

Pour qu'il y ait dans ce cas une compensation correcte du balayage, le repliement doit être effectué d'une manière mieux appropriée. La condition qui doit être vérifiée pour que le repliement se fasse correctement est la suivante :

$$(AB \times BC, BC \times CD)_{BC} + (BC \times CD, CD \times DE)_{DC} + (CD \times DE, DE \times EF)_{DE}$$
$$+ (DE \times EF, EF \times BC)_{FE} = \pi$$

ou par exemple $(AB \times BC, BC \times CD)_{BC}$, représente l'angle entre les produits vectoriels $(AB \times BC)$ et $(BC \times CD)$, orienté par le vecteur $BC$.

Cette condition ne peut pas être vérifiée si les points A,B,C,D,E,F sont coplanaires. Il est donc nécessaire d'utiliser un trajet optique dans lequel les éléments du dispositif de balayage ne sont pas tous dans le même plan. Par exemple, le trajet ABCDEF peut être du type illustré sur la figure 11, sous plusieurs vues, avec indication des repères. D'une manière générale, ce trajet est caractérisé par les coordonnées tridimensionnelles des points A,B,C,D,E,F. Les orientations des miroirs s'en déduisent. Par exemple, le miroir passant par le point B est orienté de telle sorte que la normale au miroir soit la bissectrice de l'angle (BA,BC). Les autres miroirs sont de même orientés de manière à ce que l'axe optique se replie bien suivant le trajet ABCDEF. Un système vérifiant cette condition peut être calculé, par exemple en utilisant la fonction « valeur cible » d'un tableur pour ajuster la position des points de manière à obtenir la valeur appropriée de la somme d'angles ci-dessus tout en maintenant la longueur totale du chemin optique à la valeur imposée par un choix de lentilles.

Un exemple particulier est représenté sur les figures 12 à 15. La figure 12 illustre la lentille utilisée. Elle est composée de deux achromats identiques. Les points P et Q sont utilisés pour caractériser la position de la lentille. Les lentilles L1 et L2 étant identiques, on notera P1,P2 le point P selon qu'il s'agit de celui de la lentille L1 ou L2, et de même Q1,Q2 le point Q selon qu'il s'agit de celui de la lentille L1 ou L2.

Les caractéristiques de cette lentille sont :

| Verre V1 | SF10 ; indice 1,73366143 (à 550 nm) |
|---|---|
| Verre V2 | BAK4, indice n=1,57099293 (à 550 nm) |
| R1 | 483,71 mm |
| d1 | 4,1 mm |
| R2 | 148,27 mm |
| d2 | 9 mm |
| R3 | -194,96 mm |
| d3 | 12 mm |
| PQ | 38,2 mm |

L'épaisseur du miroir galvanométrique utilisé est de 6 mm. Les figures 13 à 15 illustrent le trajet optique du faisceau suivant différentes vues. La configuration est caractérisée par les coordonnées des points A,B,C,D,E,F dans un repère orthonormé, en mm:

| Point/coordonnée | A | B | C | D | E | F |
|---|---|---|---|---|---|---|
| X | 0,0000 | 219,9341 | 219,9341 | -39,2426 | -39,2426 | -4,2426 |
| Y | 0,0000 | 0,0000 | 68,7576 | 4,2426 | 4,2426 | 4,2426 |
| Z | 0.0000 | 0,0000 | 13,1298 | 45,0000 | 0.0000 | 0,0000 |

On vérifie l'équation :

$$(AB \times BC, BC \times CD)_{BC} + (BC \times CD, CD \times DE)_{DC} + (CD \times DE, DE \times EF)_{DE}$$
$$+ (DE \times EF, EF \times BC)_{FE} = \pi$$

Les distances suivant l'axe optique sont les suivantes en mm, la lettre R désignant la position du réseau de trous microscopiques 204:

| API | 142,881 |
| --- | --- |
| PIQI | 38,2 |
| QIB | 38,852 |
| BC | 70 |
| CR | 29,523 |
| RQ2 | 138,375 |
| Q2P2 | 38,2 |
| P2D | 62,882 |
| DE | 45 |
| EF | 35 |

Les figures 13 à 15 illustrent cet exemple de réalisation suivant plusieurs vues. Sur la vue en perspective de la figure 15, on a seulement indiqué les points de repliement A,B,C,D,E.F. Sur les deux autres vues on a indiqué tous les points du tableau ci-dessus. On n'a pas représenté les lentilles objet et image (équivalents des lentilles 111 et 114 de la figure 7) et on a donc représenté uniquement l'ensemble de balayage et de compensation, équivalent de l'ensemble 120 de la figure 7. Dans le dispositif de balayage complet, les lentilles objet et image doivent être ajoutées de la même manière que sur la figure 7. L'ensemble de balayage et de compensation représenté sur les figures 13 à 15 peut être fixé sur un bâti unique directement lié au sol, les lentilles objet et image étant alors fixées sur la même table optique que le microscope utilisé.

### Applications industrielles

Le présent dispositif de balayage peut être utilisé pour la microscopie confocale à balayage, par exemple pour la biologie cellulaire.

### Revendications

1.   Dispositif de balayage optique confocal (120) comprenant:

   - un miroir mobile en rotation (101) comprenant une face objet (101a) et une face image (101b), la face image du miroir mobile en rotation étant opposée à la face objet du miroir mobile en rotation,
   - un chemin optique reliant la face objet du miroir mobile en rotation à la face image du miroir mobile en rotation,
   - au moins un trou microscopique placé dans un plan image intermédiaire (104) sur le chemin optique,
   - un premier groupe de lentilles constitué des lentilles placées sur le chemin optique entre la face objet du miroir mobile en rotation et le trou microscopique,
   - un second groupe de lentilles constitué des lentilles placées sur le chemin optique entre le trou microscopique et la face image du miroir mobile en rotation, et
   - exactement quatre miroirs (103, 105, 108, 109) de redirection repliant le chemin optique pour permettre au chemin optique de relier la face objet du miroir mobile en rotation à la face image du miroir mobile en rotation, **caractérisé par** les faits suivants :
   - lesdits premier et second groupes de lentilles ont des distances focales positives, et
   - l'orientation des miroirs de redirection est adaptée pour replier le trajet optique de manière à ce qu'un faisceau incident suivant une direction fixe sur la face objet quitte la face image avec une direction fixe, indépendante de la position du miroir mobile, pour un ensemble d'angles de rotation utiles du miroir mobile, et de manière à ce qu'un faisceau incident sur la face image en provenance de la face objet ait même direction et même sens que le même faisceau lorsqu'il quitte la face objet en direction de la face image.

2.   Dispositif suivant la revendication 1, **caractérisé par le fait que** chacun desdits groupes de lentilles a un plan focal situé sur une face du miroir mobile en rotation et un plan focal situé sur ledit au moins un trou microscopique.

3.   Dispositif suivant une des revendications 1 ou 2, **caractérisé par le fait que** les deux groupes de lentilles sont identiques l'un à l'autre.

4. Dispositif suivant une des revendications 1 à 3, **caractérisé par le fait que** l'orientation des miroirs de redirection est adaptée pour que les points *A, B, C, D, E, F* soient non coplanaires, ou :

> *A* est le point de la face objet du miroir mobile qui se trouve sur l'axe optique,
> *B* est le point du premier miroir de redirection atteint par un faisceau dirigé de la face objet vers la face image du miroir mobile, qui se trouve sur l'axe optique,
> *C* est le point du deuxième miroir de redirection atteint par un faisceau dirigé de la face objet vers la face image du miroir mobile, qui se trouve sur l'axe optique,
> *D* est le point du troisième miroir de redirection atteint par un faisceau dirigé de la face objet vers la face image du miroir mobile, qui se trouve sur l'axe optique,
> *E* est le point du quatrième miroir de redirection atteint par un faisceau dirigé de la face objet vers la face image du miroir mobile, qui se trouve sur l'axe optique, et
> *F* est le point de la face image du miroir mobile qui se trouve sur l'axe optique.

5. Dispositif suivant la revendication 4, **caractérisé par le fait que** l'orientation des miroirs de redirection est adaptée pour que les points *A,B,C,D,E,F* vérifient la relation :

$$\left(AB \times BC, BC \times CD\right)_{BC} + \left(BC \times CD, CD \times DE\right)_{DX} + \left(CD \times DE, DE \times EF\right)_{DE}$$
$$+ \left(DE \times EF, EF \times BC\right)_{FE} = \pi$$

ou $(UV \times VX, VX \times XY)_{VX}$ représente l'angle entre le produit vectoriel $(UV \times VX)$ des vecteurs *UV* et *VX,* et le produit vectoriel $(VX \times XY)$ des vecteurs *VX* et *XY,* orienté par le vecteur *VX.*

## Claims

1. - A confocal optical scanning device comprising:

> - a rotationally movable mirror, comprising an object face and an image face, the image face of the rotationally movable mirror being opposite to the object face of the rotationally movable mirror,
> - an optical path connecting the object face of the rotationally movable mirror to the image face of the rotationally movable mirror,
> - at least one microscopic hole placed in an intermediate image plane on said optical path,
> - a first group of lenses made up of the lenses placed on the optical path between the object face of the rotationally movable mirror and the microscopic hole,
> - a second group of lenses made up of the lenses placed on the optical path between the microscopic hole and the image face of the rotationally movable mirror, and
> - exactly four redirection mirrors folding the optical path to allow the optical path to connect the object face of the rotationally movable mirror to the image face of the rotationally movable mirror,

**Characterized by** the following facts:

> - said first and second groups of lenses have positive focal lengths, and
> - the orientation of the redirection mirrors is adapted to fold the optical path so that a beam incident in a fixed direction on the object face leaves the image face with a fixed direction, independent of the position of the movable mirror, for a set of useful rotation angles of the movable mirror, and so that a beam incident on the image face coming from the object face has the same axis and the same direction as the same beam when it leaves the object face towards the image face.

2. - Device according to claim 1, **characterized by** the fact that each of said groups of lenses has a focal plane on a face of the rotationally movable mirror and a focal plane on said microscopic hole.

3. - Device according to any of claims 1 or 2, **characterized by** the fact that the two groups of lenses are identical to one another.

**4.** - Device according to any of claims I to 3, **characterized by** the fact that the orientation of the redirection mirrors is adapted so that the points *A, B, C, D, E, F* are not in a same plane, wherein :

*A* is the point of the object face of the movable mirror which is situated on the optical axis,
*B* is the point of the first redirection mirror reached by a beam directed from the object face to the image face of the movable mirror, which is situated on the optical axis,
*C* is the point of the second redirection mirror reached by a beam directed from the object face to the image face of the movable mirror, which is situated on the optical axis,
*D* is the point of the third redirection mirror reached by a beam directed from the object face to the image face of the movable mirror, which is situated on the optical axis,
*E* is the point of the fourth redirection mirror reached by a beam directed from the object face to the image face of the movable mirror, which is situated on the optical axis,
*F* is the point of the image face of the movable mirror which is situated on the optical axis.

**5.** -Device according to claim 4, **characterized by** the fact that the orientation of the redirection mirrors is adapted so that the points *A,B,C,D,E,F* verify the following equation:

$$\left(AB \times BC, BC \times CD\right)_{BC} + \left(BC \times CD, CD \times DE\right)_{DC} + \left(CD \times DE, DE \times EF\right)_{DE}$$
$$+ \left(DE \times EF, EF \times BC\right)_{EF} = \pi$$

*wherein (UV× VX, VX× XY)$_{VX}$* represents the angle between the vector product *(UV× VX)* of the vectors *UV* et *VX,* et the vector product *(VX× XY)* of the vectors *VX* et *XY,* oriented by the vector *VX .*

**Patentansprüche**

**1.** Konfokale optische Scanvorrichtung, welche umfasst:

- einen drehbar montierten Spiegel, der eine objektseitige Fläche und eine bildseitige Fläche umfasst, wobei die bildseitige Fläche des drehbar montierten Spiegels der objektseitige Fläche des drehbar montierten Spiegels gegenüber liegt,
- ein Lichtweg, der die objektseitige Fläche des drehbar montierten Spiegels mit der bildseitigen Fläche des drehbar montierten Spiegels verbindet,
- mindestens ein mikroskopisches Loch, das in einer zwischengelagerten Bildebene auf dem Lichtweg angeordnet ist,
- eine erste Linsengruppe bestehend aus den Linsen, die auf dem Lichtweg zwischen der objektseitigen Fläche des drehbar montierten Spiegels und dem mikroskopischen Loch angeordnet sind,
- eine zweite Linsengruppe, bestehend aus den Linsen, die auf dem Lichtweg zwischen dem mikroskopischen Loch und der bildseitigen Fläche des drehbar montierten Spiegels angeordnet sind, und
- genau vier Umlenkspiegel, die den Lichtweg so umlenken können, dass dieser die objektseitige Fläche des drehbar montierten Spiegels mit der bildseitigen Fläche des drehbar montierten Spiegels verbindet,

**dadurch gekennzeichnet, dass**:

- die erste und die zweite der genannten Linsengruppen positive Brennweiten haben, und
- die Orientierung der Umlenkspiegel so eingestellt ist, dass der Lichtweg so umgelenkt wird, dass ein mit einer festen Richtung auf der objektseitigen Fläche einfallendes Strahlenbündel die bildseitige Fläche mit einer festen Richtung verlässt, und zwar unabhängig von der Position des drehbaren Spiegels, für eine Menge geeigneter Drehwinkel des drehbaren Spiegels, und so, dass ein von der objektseitigen Fläche kommendes, auf der bildseitigen Fläche einfallendes Strahlenbündel dieselbe Richtung und denselben Richtungssinn hat wie dasselbe Strahlenbündel, wenn es die objektseitige Fläche in Richtung der bildseitigen Fläche verlässt.

**2.** Vorrichtung gemäß Patentanspruch 1, **dadurch gekennzeichnet, dass** jede der genannten Linsengruppen eine Brennebene hat, die sich auf einer Fläche des drehbar montierten Spiegels befindet, und eine Brennebene, die sich auf dem mindestens einen genannten mikroskopischen Loch befindet.

**3.** Vorrichtung gemäß einem der Patentansprüche 1 oder 2, **dadurch gekennzeichnet, dass** die beiden Linsengruppen untereinander identisch sind.

**4.** Vorrichtung gemäß einem der Patentansprüche 1 bis 3, **dadurch gekennzeichnet, dass** die Orientierung der Umlenkspiegel so eingestellt ist, dass die Punkte *A, B, C, D, E, F* nicht in ein und derselben Ebene liegen, wobei:

*A* der Punkt der objektseitigen Fläche des drehbaren Spiegels ist, der sich auf der optischen Achse befindet,
*B* der Punkt des ersten Umlenkspiegels ist, der von einem Strahlenbündel erreicht wird, das von der objektseitigen Fläche zur bildseitigen Fläche des drehbaren Spiegels gelenkt wird, der sich auf der optischen Achse befindet,
*C* der Punkt des zweiten Umlenkspiegels ist, der von einem Strahlenbündel erreicht wird, das von der objektseitigen Fläche zur bildseitigen Fläche des drehbaren Spiegels gelenkt wird, der sich auf der optischen Achse befindet,
*D* der Punkt des dritten Umlenkspiegels ist, der von einem Strahlenbündel erreicht wird, das von der objektseitigen Fläche zur bildseitigen Fläche des drehbaren Spiegels gelenkt wird, der sich auf der optischen Achse befindet,
*E* der Punkt des vierten Umlenkspiegels ist, der von einem Strahlenbündel erreicht wird, das von der objektseitigen Fläche zur bildseitigen Fläche des drehbaren Spiegels gelenkt wird, der sich auf der optischen Achse befindet, und
*F* der Punkt der bildseitigen Fläche des drehbaren Spiegels ist, der sich auf der optischen Achse befindet.

**5.** Vorrichtung gemäß Patentanspruch 4, **dadurch gekennzeichnet, dass** die Orientierung der Umlenkspiegel so eingestellt ist, dass die Punkte *A,B,C,D,E,F* der folgenden Bedingung genügen:

$$\left(AB \times BC, BC \times CD\right)_{BC} + \left(BC \times CD, CD \times DE\right)_{DC} + \left(CD \times DE, DE \times EF\right)_{DE}$$
$$+ \left(DE \times EF, EF \times BC\right)_{FE} = \pi \ ,$$

wobei *(UV×VX,VX×XY)*$_{VX}$ den durch den Vektor *VX* bestimmten Winkel zwischen dem Vektorprodukt *(UV×VX)* der Vektoren *UV* und *VX* und dem Vektorprodukt *(VX×XY)* der Vektoren *VX* und *XY* repräsentiert.

**Fig. 1(a)**

**Fig. 1(b)**

**Fig. 2(a)**

**Fig. 2(b)**

**Fig. 3(a)**

**Fig. 3(b)**

Fig. 4(a)

Fig. 4(b)

Fig. 5

Fig. 6(a)

Fig. 6(b)

Fig. 6(c)

**Fig. 7**

(ART ANTERIEUR)

**Fig. 8**
(ART ANTERIEUR)

**Fig. 9**
(ART ANTERIEUR)

**Fig. 10**

**Fig. 11**

**Fig. 12**

**Fig. 13**

**Fig. 14**

**Fig. 15**

**EP 1 481 277 B1**

**RÉFÉRENCES CITÉES DANS LA DESCRIPTION**

**Documents brevets cités dans la description**

- FR 0102890 W
- WO 0122146 A
- FR 0102898 W